# EUROPÄISCHE PATENTSCHRIFT

(11) **EP 0 582 957 B1**
(45) Veröffentlichungstag und Bekanntmachung des Hinweises auf die Patenterteilung: **23.09.1998**
(21) Anmeldenummer: 93112481.2
(22) Anmeldetag: 04.08.1993
(51) Int. Cl.: C07F 9/6571

(54) **Verfahren zur Herstellung von 6-Chlor-(6H)-dibenz-(c,e)(1,2)-oxaphosphorin**
Process for the preparation of 6-chloro-(6H)-dibenz-(C,E) (1,2)-oxaphosphorine
Procédé de préparation de la 6-chloro-(6H)-dibenz-(C,E) (1,2)-oxaphosphorine

(30) Priorität: 11.08.1992 DE 4226554
(43) Veröffentlichungstag der Anmeldung: 16.02.1994
(73) Patentinhaber: Clariant GmbH, 65929 Frankfurt am Main (DE)
(72) Erfinder: Kleiner, Hans-Jerg Dr., D-61476 Kronberg/Ts (DE)

(56) Entgegenhaltungen:
- DE-A- 2 034 887
- DE-A- 2 730 371
- Houben-Weyl, "Methoden der organ. Chemie",Bd. XII/2, Seiten 49,59,60

## Beschreibung

6-Chlor-(6H)-dibenz-[c,e][1,2]-oxaphosphorin ist ein technisch bedeutendes Zwischenprodukt zur Herstellung von Flammschutzmitteln, Zusatzmitteln bei Polymerisationsprozessen, Photoinitiatoren, Stabilisatoren für Polymere und photographischem Material. Seine Herstellung erfolgt im allgemeinen aus o-Phenylphenol und Phosphortrichlorid in Gegenwart geringer Mengen eines Katalysators wie Zinkchlorid (DE-Offenlegungsschrift 2034887). Bei diesem Herstellprozeß wird o-Phenylphenol mit Phosphortrichlorid etwa im Molverhältnis 1:1,25 langsam erhitzt bis etwa 140-150°C. Dann wird eine katalytische Menge Zinkchlorid zugesetzt und erneut erhitzt bis zuletzt auf 190-210°C. Überschüssiges Phosphortrichlorid destilliert dabei während des gesamten Prozesses ab. Nach Reinigung über einen Destillationsschritt beträgt die Ausbeute etwa 80 % d.Th. (s. hierzu auch S.D. Pastor et al., Phosphorus and Sulfur 31, 71,1987).

Gemäß einer Variante dieses Herstellverfahrens wird zu dem o-Phenylphenol sofort das Zinkchlorid zugefügt und zu dieser Mischung bei 80°C anschließend das Phosphortrichlorid zudosiert. Dann wird nach Beendigung der Phosphortrichloridzugabe die Temperatur auf 180°C erhöht und Phosphortrichlorid fortgesetzt in solchem Ausmaß zugegeben, daß der Rückfluß des Phosphortrichlorids langsam aufrechterhalten wird (DE-Offenlegungsschrift 2730 371).

Beide Verfahren erfordern eine spezielle Temperaturführung. Nachteilig ist dabei, daß bei stufenweisen Erhöhungen der Temperatur Phosphortrichlorid ständig abdestilliert und erneut dem Prozeß zugeführt werden muß.

Gegenstand der Erfindung ist nun ein Verfahren zur Herstellung von 6-Chlor-(6H)-dibenz-[c,e][1,2]-oxaphosphorin]-oxaphosphorin der Formel (I) 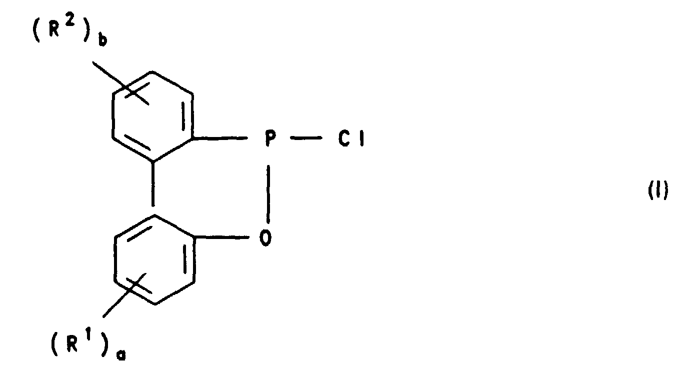 worin
R¹ und R² gleich oder verschieden sind und für Halogen, vorzugsweise Chlor, Alkyl oder Alkoxy mit jeweils 1 bis 6, vorzugsweise 1 bis 4 Kohlenstoffatomen stehen und
a und b ganze Zahlen von 0 bis 3, vorzugsweise 0 bis 2 bedeuten,
durch Umsatz von o-Phenylphenol der Formel (II) 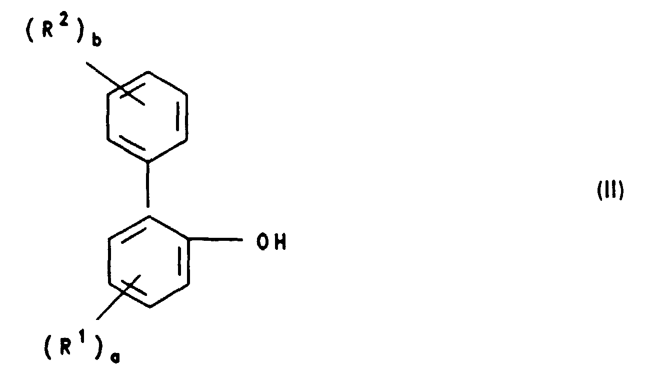 worin R¹, R², a und b die obige Bedeutung haben, mit Phosphortrichlorid in Gegenwart von Lewissäuren als Katalysatoren unter Abspaltung von Chlorwasserstoff, dadurch gekennzeichnet, daß man bei Temperaturen von 170-220°C zu dem Gemisch aus Verbindung (II) und Lewissäure das Phosphortrichlorid zudosiert.

Beispiele für Alkyl bzw. Alkoxy in den Resten R¹ und R² in der Verbindungen (I)/(II) sind Methyl, Ethyl, Propyl, Isopropyl und die verschiedenen Butylreste bzw. Methoxy und Ethoxy. Vorzugsweise sind die Indices a und b in den Formeln (I)/(II) gleich und stehen insbesondere für die Zahl Null.

Das erfindungsgemäße Verfahren, das in zwei Phasen mit unterschiedlicher Reaktionsgeschwindigkeit abläuft, wird vorzugsweise bei Temperaturen von 175 bis 195°C durchgeführt. Die Reaktionszeit beträgt im allgemeinen 8 bis 20, vorzugsweise 10 bis 15 Stunden.

Als Katalysator kommen erfindungsgemäß Lewis-Säuren, wie beispielsweise Halogenide der Gruppe II b und IIIa des Perioden-Systems in Frage, wobei Zinkchlorid besonders bevorzugt ist. Weitere geeignete Katalysatoren sind beispielsweise in der eingangs genannten DE-Offenlegungsschrift 2 034 887 beschrieben. Die Menge an Katalysator beträgt zweckmäßigerweise 0,05 bis 2 Gew.-%, vorzugsweise 0,3 bis 0,6 Gew.-%, bezogen auf die eingesetzte Verbindung (II).

Die Verbindung (II), vorzugsweise unsubstituiertes o-Phenylphenol, und das Phosphortrichlorid werden in der Regel mindestens im Molverhältnis von 1:1 eingesetzt, wobei jedoch ein geringer Überschuß an Phosphortrichlorid im allgemeinen günstig ist. Vorzugsweise beträgt dieses Molverhältnis 1:1 bis 1:3, insbesondere 1:1 bis 1:2.

Wie oben bereits erwähnt, verläuft die erfindungsgemäße Umsetzung in zwei Phasen mit unterschiedlicher Reaktionsgeschwindigkeit. Die erste Hälfte des Phosphortrichlorids reagiert dabei schnell ab und kann daher bei den angegebenen Reaktionstemperaturen schnell zudosiert werden. Die zweite Hälfte des Phosphortrichlorids reagiert dann in der Folgereaktion deutlich langsamer und kann daher nur entsprechend langsamer zugegeben werden. Zu schnelle Zugabe des Phosphortrichlorids bewirkt nämlich zwangsläufig einen Abfall der Reaktionstemperatur bei zu starkem Rückfluß. Zweckmäßig wird zum Ende der Reaktion noch ein bis sechs Stunden, vorzugsweise 2 bis 4 Stunden mit überschüssigem Phosphortrichlorid bei der Reaktionstemperatur am Rückfluß gehalten, um die Umsetzung möglichst zu vervollständigen. Das überschüssige Phosphortrichlorid wird dann nach beendeter Umsetzung, gegebenenfalls im Vakuum, abdestilliert.

Das erfindungsgemäße Verfahren kann chargenweise oder kontinuierlich durchgeführt werden. Üblicherweise erfolgt dabei der Umsatz der Verbindung (II) mit dem Phosphortrichlorid unter Normaldruck, jedoch ist auch Überdruck möglich. Hierbei muß der entstehende Chlorwasserstoff unter Druckausgleich abgeführt werden.

Das anfallende Rohprodukt (I) ist für zahlreiche Umsetzungen rein genug und kann direkt, z.B. als 50 %ige Lösung in Toluol oder Xylol, weiterverarbeitet werden. Es wird vorzugsweise für die eingangs aufgeführten Zwecke eingesetzt.

Die nachfolgenden Beispiele dienen zur Erläuterung der Erfindung.

### Beispiel 1

102 g (0,6 Mol) o-Phenylphenol und 0,6 g Zinkchlorid werden unter Rühren auf 180°C erhitzt. Nun werden 82,5 g (0,6 Mol) Phosphortrichlorid so eingetropft, daß sich ein schwacher Rückfluß von Phosphortrichlorid ergibt unter gleichzeitigem Abgasen von Chlorwasserstoff. Nach 90 Minuten ist etwa die Hälfte zugegeben. Die zweite Hälfte wird in etwa 5 Stunden zugetropft. Weitere 20 g (0,146 Mol) Phosphortrichlorid werden in 4 Stunden eingetropft, da ein Teil des Phosphortrichlorids zusammen mit dem Chlorwasserstoff entwichen ist und in einer der Apparatur nachgeschalteten Kühlfalle kondensiert ist. Anschließend wird das überschüssige Phosphortrichlorid abdestilliert und das 6-Chlor-(6H)-dibenz-[c,e][1,2]-oxaphosphorin bei 0,17 kPa und einer Übergangstemperatur von 165°C destilliert. Man erhält 135 g kristallines Produkt. Das entspricht einer Ausbeute von 96 % d.Th.

### Beispiel 2

700 g (4,12 Mol) o-Phenylphenol und 4,1 g Zinkchlorid werden unter Rühren auf 180°C erhitzt. Nun werden 692 g (5,03 Mol) Phosphortrichlorid in 12 Stunden zugetropft. Weitere 5 Stunden wird am Rückfluß gehalten, zum Schluß wird kein Chlorwasserstoff mehr entwickelt. Das überschüssige Phosphortrichlorid wird bei 120°C im Vakuum abdestilliert, das Reaktionsgut auf 100°C abgekühlt und 966 g Toluol hinzugefügt. Man kühlt dann auf Raumtemperatur und erhält eine 50 %ige Lösung von 6-Chlor-(6H)-dibenz-[c,e][1,2]-oxaphosphorin in Toluol. Das 31P-NMR-Spektrum ergibt eine 95,5 %ige Reinheit.

## Patentansprüche

1. Verfahren zur Herstellung von 6-Chlor-(6H)-dibenz-[c,e][1,2]-oxaphosphorin der Formel (I), 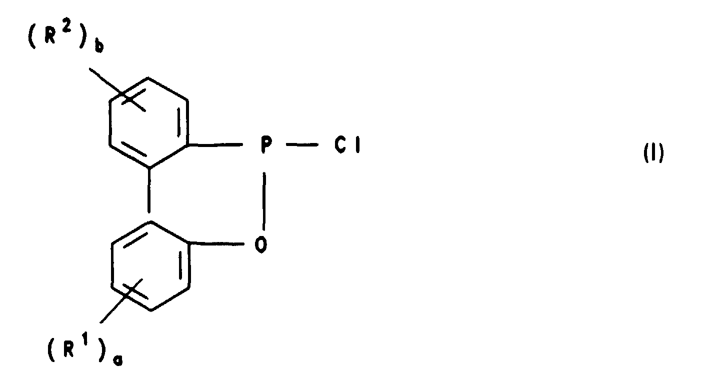 worin R¹ und R² gleich oder verschieden sind und für Halogen, Alkyl oder Alkoxy mit jeweils 1 bis 6 Kohlenstoffatomen stehen und a und b ganze Zahlen von 0 bis 3, vorzugsweise 0 bis 2 bedeuten,
durch Umsatz von o-Phenylphenol der Formel (II), 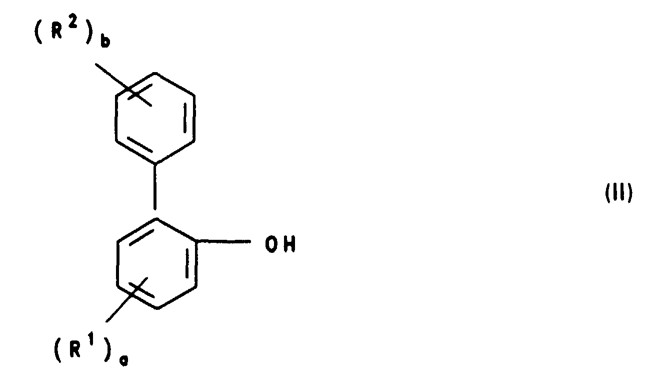 worin R¹, R², a und b die obige Bedeutung haben, mit Phosphortrichlorid in Gegenwart von Lewis-Säuren als Katalysatoren unter Abspaltung von Chlorwasserstoff, dadurch gekennzeichnet, daß man bei Temperaturen von 170-220°C zu dem Gemisch aus Verbindung (II) und Lewis-Säure das Phosphortrichlorid zudosiert.

2. Verfahren nach Anspruch 1, dadurch gekennzeichnet, daß die Temperatur 175 bis 195°C beträgt.

3. Verfahren nach Anspruch 1 oder 2, dadurch gekennzeichnet, daß als Katalysator Zinkchlorid eingesetzt wird.

4. Verfahren nach einem oder mehreren der Ansprüche 1 bis 3, dadurch gekennzeichnet, daß die Menge an Katalysator 0,05 bis 2 Gew.-%, bezogen auf die Verbindung (II) beträgt.

5. Verfahren nach einem oder mehreren der Ansprüche 1 bis 4, dadurch gekennzeichnet, daß die Verbindung (II) und Phosphortrichlorid im Molverhältnis von 1:1 bis 1:2 eingesetzt werden.

6. Verfahren nach einem oder mehreren der Ansprüche 1 bis 5, dadurch gekennzeichnet, daß a und b in den Formeln (I)/(II) für die Zahl Null stehen.

## Claims

1. A process for preparing 6-chloro-(6H)-dibenz-[c,e] [1,2]oxaphosphorin of the formula (I), 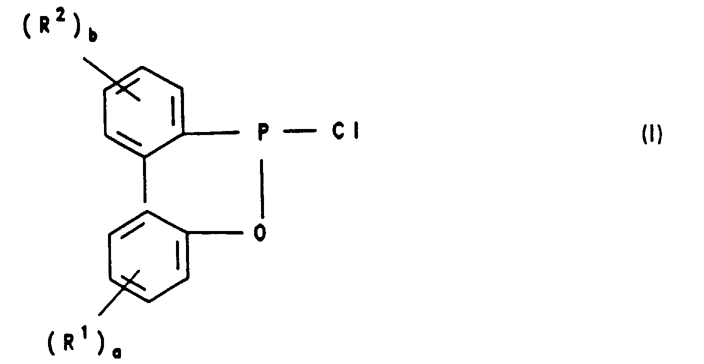 in which R¹ and R² are identical or different and are halogen, alkyl or alkoxy, each having from 1 to 6 carbon atoms, and a and b are integers from 0 to 3, preferably from 0 to 2,
by reaction of o-phenylphenol of the formula (II), 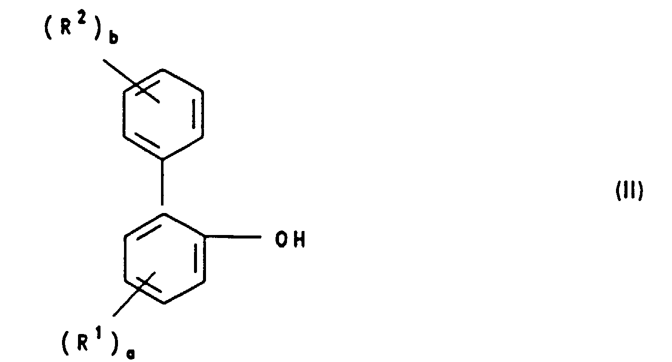 in which R¹, R², a and b are as defined above, with phosphorus trichloride in the presence of Lewis acids as catalysts with elimination of hydrogen chloride, wherein the phosphorus trichloride is metered into the mixture of compound (II) and Lewis acid at temperatures of 170-220°C.

2. The process as claimed in claim 1, wherein the temperature is from 175 to 195°C.

3. The process as claimed in claim 1 or 2, wherein zinc chloride is used as catalyst.

4. The process as claimed in one or more of claims 1 to 3, wherein the amount of catalyst is from 0.05 to 2% by weight, based on the compound (II).

5. The process as claimed in one or more of claims 1 to 4, wherein the compound (II) and phosphorus trichloride are used in a molar ratio of from 1:1 to 1:2.

6. The process as claimed in one or more of claims 1 to 5, wherein a and b in the formulae (I)/(II) are zero.

## Revendications

1. Procédé de préparation d'une 6-chloro-(6H)-dibenz-[c,e][1,2]oxa-phosphorine de formule (I) 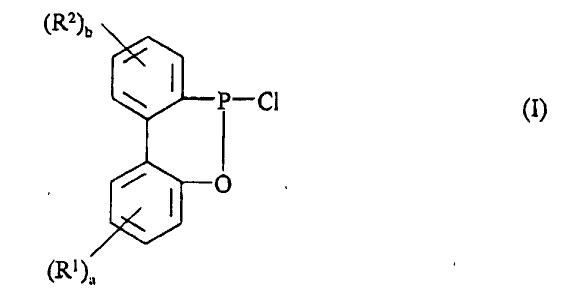
où R¹ et R² sont identiques ou différents et représentent halogène, alkyle ou alcoxy de 1 à 6 atomes de carbone dans chaque cas, et
a et b représentent des nombres entiers de 0 à 3, de préférence de 0 à 2, par réaction d'un o-phénylphénol de formule (II) 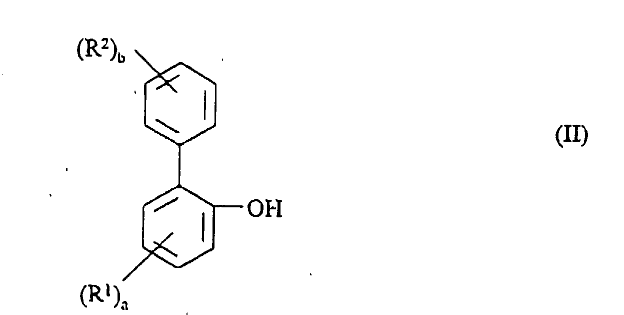 où R¹, R², a et b ont la signification ci-dessus, avec du trichlorure de phosphore en présence d'acides de Lewis comme catalyseurs avec dégagement de chlorure d'hydrogène, caractérisé en ce que l'on ajoute le trichlorure de phosphore au mélange constitué par le composé (II) et l'acide de Lewis à des températures de 170-220°C.

2. Procédé selon la revendication 1, caractérisé en ce que la température est de 175 à 195°C.

3. Procédé selon la revendication 1 ou 2, caractérisé en ce que l'on utilise du chlorure de zinc comme catalyseur.

4. Procédé selon une ou plusieurs des revendications 1 à 3, caractérisé en ce que la quantité de catalyseur est de 0,05 à 2 % en masse par rapport au composé (II).

5. Procédé selon une ou plusieurs des revendications 1 à 4, caractérisé en ce que le composé (II) et le trichlorure de phosphore sont utilisés dans le rapport molaire de 1:1 à 1:2.

6. Procédé selon une ou plusieurs des revendications 1 à 5, caractérisé en ce que a et b dans les formules (I)/(II) représentent le nombre zéro.
